# EUROPEAN PATENT APPLICATION

(11) **EP 4 389 338 A1**
(43) Date of publication of application: **26.06.2024**
(21) Application number: 22214764.7
(22) Date of filing: 19.12.2022
(51) Int. Cl.: B23K 20/10, B23K 26/21, B23K 37/04, F16F 1/02, H02K 33/00, B23K 101/36

(54) **CONTROL METHOD OF A WELDING DEVICE, AN ELASTIC GUIDING SYSTEM, A WELDING DEVICE POSITIONING ARRANGEMENT, AND A WELDING DEVICE**

(71) Applicant: Branson Ultraschall Niederlassung der Emerson Technologies GmbH & Co. OHG, 63128 Dietzenbach (DE)
(72) Inventor: Mot'ovský, Michal, 92003 Hlohovec - Sulekovo (SK)
(74) Representative: HWP Intellectual Property

(57) **Abstract**

A control method of a welding device (3) having an upper tool (7), a lower tool (5), a control unit and a welding device positioning arrangement (1; 100; 200) is described. The welding device positioning arrangement uses a drive system having no mechanical losses or at most mechanical losses below the force to be applied. Further, an elastic guiding system is used in the welding device positioning arrangement which operates loss-free. The control method comprises the steps of moving the lower tool (5) and the upper tool (7) relative to each other, actuating the at least one drive system (14) of the welding device positioning arrangement (1; 100; 200) so that a first and a second component are pressed against each other with a force and, during the actuating of the at least one drive system (14), measuring a force at a static first section (10; 110; 210) of the welding device positioning arrangement (1; 100; 200) and/or a position of a movable second section (12; 112; 212) of the welding device positioning arrangement (1; 100; 200) relative to the static first section (10; 110; 210), comparing the measured force and/or position with a predetermined force and/or position, and stopping the actuating after the predetermined force and/or position has been reached. Subsequently, the first and the second component are welded to each other, the at least one drive system (14) is actuated, and the lower tool (5) and the upper tool (7) are moved relative to each other.

## Description

### 1. Field of the invention

The present invention is related to a control method of a welding device, a spring of an elastic guiding system of a welding device positioning arrangement, a welding device positioning arrangement, and a welding device.

### 2. Background of the invention

When welding two components to one another, for example, welding devices with a lifting table carrying a lower tool are used. The components to be welded to one another are positioned on the lower tool and the lower tool is moved along the vertical direction. By this, the two components are clamped with a force between the lower tool and an upper tool of the welding device. Current welding devices, in particular for small forces and thus for small applications, i.e., small components to be welded, are ultrasonic or laser welding presses which comprise a linear guide and are pneumatically or electrically driven.

The associated lifting table systems show friction losses which occur due to the mechanics used such as linear guides, motors, hydraulics with cylinders, bearings and further components involved in the force-applying system. These friction losses lead to the formation of hysteresis in a force control of the welding device. At this, the force applied via the lifting table shows path dependence. This means that the exact magnitude of the effect depends not only on the causing variable, i.e., the specified nominal force, but also on the history of the adjusting components of the lifting table. A typical hysteresis behavior is the occurrence of a hysteresis loop. This is created by moving the causing variable back and forth between two different values. Thus, depending on the history, the lifting table can assume one of several possible positions with the same input variable.

Moreover, friction losses can lead to the so-called stick-slip effect. This effect is also known as the adhesive sliding effect and characterizes the sticking sliding of solid bodies moving against each other. This may occur if the static friction is noticeably greater than the sliding friction. At this, damped coupled surface parts exert a fast motion sequence: sticking, tensioning, separating, and sliding. This effect is often undesired in technical applications. It generates noise and structure-borne noise, which is often perceived as unpleasant and may lead to increased wear and tear and material fatigue. In addition, it can completely prevent the execution of even the smallest movements, for example on precision tool machines.

The limits of the known welding devices therefore lie in the control of low forces, which requires low friction or low losses in the welding device and in particular in the adjustment system of the lifting table, whereby at least a linear behavior is required. At this, the existing guides generate friction and experience has shown that the existing guides have a hysteresis especially in this small force range, which is required for welding filigree components such as foils for in-ear headphones. Here, hysteresis from +/-5 N to +/-30 N are not uncommon. Also, all drives like pneumatic cylinder, hydraulic cylinder or electric motor with spindle have losses and friction. Likewise, losses and friction occur during the conversion of a rotary motion into a linear motion.

Regarding welding devices, these effects therefore lead to non-reproducible welding results, especially with small forces required for welding filigree parts such as foils for in-ear headphones, and thus make these components completely non-weldable. Since friction losses and the hysteresis during contact detection can lead to large force peaks, this can also lead to component destruction in small applications.

A device which is improved in this regard is described in EP 3 620 257 A1. Herein, a welding device positioning arrangement for a welding device is described with which two components can be pressed against each other. The welding device positioning arrangement is arranged at the lower tool and comprises a static first section and a second section movable relative to the first section. At least one drive system is connected at a first end to the first section and at a second end to the second section, as well as at least one elastic guiding system by which the first section and the second section are connected to one another. The first section and the second section are movable relative to each other along only one axis due to the at least one elastic guiding system, so that an axial length of the arrangement can be varied. A moving coil drive may be used or another drive without mechanical losses or with mechanical losses less than a clamping force to be applied during operation.

A technical problem in this regard is to provide an improved control method for such a welding device having a welding device positioning arrangement as well as an alternative welding device positioning arrangement so that in particular small components can still be positioned and welded with a high accuracy.

### 3. Summary of the invention

The above object is solved by a control method of a welding device according to independent claim 1, an elastic guiding system of a welding device positioning arrangement according to independent claim 7, a welding device positioning arrangement according to independent claim 10 as well as a welding device according to independent claim 11. Further preferred embodiments and developments result from the following description, the drawings as well as the appending claims.

An inventive control method of a welding device having an upper tool, a lower tool, a control unit and a welding device positioning arrangement comprising a static first section and a second section movable relative to the static first section, at least one drive system connected at a first end to the first section and at a second end to the second section, and at least one elastic guiding system by means of which the first section and the second section are connected to each other, wherein the first section and the second section are movable relative to each other along only one axis due to the at least one elastic guiding system, so that an axial length of the welding device positioning arrangement can be varied, and the at least one drive system of the welding device positioning arrangement comprises a moving coil drive, or a piezo motor, a linear motor, an electromagnetic drive system, a coil system or a drive with field or excitation coil, or a rotatory motor which comprises mechanical losses which are less than a force with which, in operation, the first component can be pressed against the second component, wherein the force is ≤ 1 kN, preferably ≤ 500 N and particularly preferably ≤ 250 N, wherein the control method comprises the following steps: moving the lower tool and the upper tool relative to each other so that a distance between the lower tool and the upper tool is decreased from an initial first distance to a reduced second distance, actuating the at least one drive system of the welding device positioning arrangement so that the distance between the static first section and the movable second section is increased whereby a first and a second component are pressed against each other with a force and, during the actuating of the at least one drive system, measuring a force at the static first section of the welding device positioning arrangement and/or a position of the movable second section of the welding device positioning arrangement relative to the static first section, comparing the measured force and/or position with a predetermined force and/or position, and stopping the actuating after the predetermined force and/or position has been reached, subsequently welding the first and the second component to each other, actuating the at least one drive system of the welding device positioning arrangement after welding so that the distance between the static first section and the movable second section is decreased, and moving the lower tool and the upper tool relative to each other so that a distance between the lower tool and the upper tool is increased, preferably from the reduced second distance to the initial first distance.

The inventive control method is used for controlling a welding device having in particular a welding device positioning arrangement as described in EP 3 620 257 A1. Thus, and for an easier understanding, it is also referred to EP 3 620 257 A1 regarding the construction and functioning of the welding device positioning arrangement.

The welding device itself can be any welding device, such as an ultrasonic welding device, a laser welding device, an infrared welding device, a vibration welding device, or a friction welding device. The welding device provides the upper tool, the lower tool, the control unit, and the welding device positioning arrangement. Preferably, the control method is stored in a memory of the control unit. Thus, it is preferred that the control unit is configured for performing the control method.

After the first and the second component have been arranged in the welding device between the lower and the upper tool, the lower tool and the upper tool are moved relative to each other. To this end and initially, the first and the second component are preferably arranged in or on the lower tool. Alternatively preferred, the first component is arranged in the lower tool and the second component is arranged in the upper tool.

The relative movement of the lower and the upper tool takes place such that the initial first distance, e.g., the distance in which the components have been arranged in the welding device, is decreased to the reduced second distance. This may be realized by moving the lower tool in the direction of the upper tool, by moving the upper tool in the direction of the lower tool or by moving both, the upper and the lower tool.

When the upper and the lower tool are arranged with the reduced second distance between each other, the at least one drive system of the welding device positioning arrangement is actuated. Due to this, the axial length of the arrangement is changed by means of the drive system. In particular, a distance between the static first section and the movable second section is increased whereby the two components to be welded are clamped with the desired force between the lower and the upper tool.

For ensuring a reliable welding and preventing damage to the components to be welded to each other, the force at the static first section of the welding device positioning arrangement and/or a position of the movable second section of the welding device positioning arrangement relative to the static first section is measured during the actuating of the drive system of the welding device positioning arrangement. At the same time, the measured force and/or position is compared with a predetermined force and/or position. After the predetermined force and/or position has been reached, the actuating of the drive system of the welding device positioning arrangement is stopped. Thus, and preferably, a closed loop control is used when actuating the drive system of the welding device positioning arrangement for clamping the first and the second components between the upper and the lower tools.

Subsequently, the first and the second component are welded to each other.

After completion of the welding, the at least one drive system of the welding device positioning arrangement is again actuated so that the distance between the static first section and the movable second section is decreased. This results in increasing the distance between the upper and the lower tool, preferably up to the reduced second distance.

Finally, the lower tool and the upper are moved relative to each other so that a distance between the lower tool and the upper tool is further increased, preferably from the reduced second distance to the initial first distance.

As drive system of the welding device positioning arrangement, the moving coil drive or voice coil actuator may be used in a first alternative. According to a second alternative, the drive system of the welding device positioning arrangement comprises a piezo motor, a linear motor, an electromagnetic drive system, a coil system or a drive with field or excitation coil. Further, and with respect to a third alternative, the at least one drive system of the welding device positioning arrangement comprises a rotatory motor which has mechanical losses which are less than a force with which, in operation, the first component can be pressed against the second component, wherein the force is ≤ 1 kN, preferably ≤ 500 N and particularly preferably ≤ 250 N. In each case, but in particular with respect to the first and second alternative, the welding device positioning arrangement is a precision welding device positioning arrangement. This means that especially the execution of smallest movements and/or the application of smallest forces can be realized by means of the welding device positioning arrangement.

The reason for the precision of the welding device positioning arrangement is that a moving coil drive is a highly dynamic drive which displays no mechanical friction. These drives can be positioned with high precision using the corresponding controls and the force can also be controlled and/or regulated with high precision. Due to their high speed, they are also particularly suitable for automated devices with high cycle rates. In principle, a loss-free drive is also provided within the scope of the second alternative, i.e., a drive system that operates without mechanical losses. Examples include piezo motors or piezoelectric motors. These are small motors that use the piezoelectric effect to generate a movement. Piezo motors can operate both linearly and rotatory. The range in which the axial length of the welding device positioning arrangement can be varied is usually a few centimeters in the case of linear piezo motors due to construction and is thus considerably greater than the actuating paths or regulating distance of the piezoelectric solid-state actuators used in the motors. Therefore, piezoelectric solid-state actuators are preferred in addition to piezo motors, especially if particularly small variations in the axial length are to be realized. In contrast to the two previously mentioned drive systems, a drive system with mechanical losses is present in the third alternative. However, these mechanical losses are lower than the force to be applied. Therefore, the welding device positioning arrangement according to the third alternative is also a precision welding device positioning arrangement which, especially in combination with the elastic guiding system, can also be used for filigree and/or extremely sensitive components. However, the range of application of the welding device positioning arrangement according to the third alternative is limited by the fact that the force to be applied to the components to be welded must be higher than the friction losses of the drive system and thus higher than for the two alternatives discussed above.

Concerning the adjustable axial length of the welding device positioning arrangement, this depends on the choice and dimensioning of the drive system, which can be adapted to the respective application. Usually, a change in axial length between 0.25 and 100 mm can be realized. Regarding the forces that can be applied, these may be between 0 N and 2 kN. The moving coil drive is further characterized by the remarkably high positioning accuracy, which is preferably at +/-0.1 µm.

Due to the elastic guiding system, the first and second sections of the welding device positioning arrangement can be moved relative to one another on only one axis. This axis may be a vertical axis in relation to a floor on which the welding machine stands. Furthermore, the elastic guiding system comprises no mechanical losses and therefore operates loss-free. In this context, loss-free means that there may be no friction or, with respect to the force required to weld the two components, only negligible friction between the movable components of the guiding system. An embodiment of a respective design possibility of the elastic guiding system will be discussed later with reference to the illustrated and described embodiments.

This combination of a low-friction and precise drive for force build-up and adjustment of the desired axial length and a low-friction guiding prevents any friction loss in the positioning arrangement. As a result, all hysteresis phenomena and stick-slip effects are avoided.

Thus, and due to the achievable accuracy, the welding device with the welding device positioning arrangement can also be used for small components, such as welding foils for in-ear headphones or the manufacture of smartphones. Consequently, the welding of filigree and/or extremely sensitive, especially electronic, components can be realized with exceptionally low welding forces. High-precision positioning of the components is also possible, as is significantly improved welding depth control. High force peaks at a contact detection between the two components are reduced and may be completely prevented due to the inventive control method. In this way, the trigger point for the actual welding start can be controlled with high precision, which leads to reproducible welding connections and any component destruction caused by this can be prevented. The degree of precision of the welding device positioning arrangement now only depends on the accuracy of the used control and the corresponding sensors.

According to a preferred embodiment of the control method, a plurality of force sensors is used, preferably three force sensors, in particular S-beam sensors, a first end of which is preferably mounted to a frame of the welding device and a second end of which is mounted to the static first section of the welding device positioning arrangement. The forces sensors, in particular the S-beam sensors, are preferably arranged equally spaced on a common circle. By proceeding this way, the force can be very effectively measured, and the control method is further improved.

In a further preferred embodiment of the control method, the relative position of the static first and the movable second section of the welding device positioning arrangement is measured by a contactless method, preferably by an optical encoder, wherein a sensor body is mounted to a frame of the welding device, in particular by a holder, and a measuring means is arranged at the moveable second section of the welding device positioning arrangement or the respective tool of the welding device. Specifically due to this preferred arrangement, a deformation of the welding device positioning arrangement, including the force sensors, if present, may be compensated. Thus, the control method using such a position sensor realizes a high precision and provides an increased accuracy.

In a first inventive alternative of the control method, the welding device positioning arrangement is arranged at the lower tool. To this end, preferably a drive is present for moving the lower tool including the welding device positioning arrangement in the direction of the upper tool before the drive system of the welding device positioning arrangement is actuated.

According to a second inventive alternative of the control method, the welding device positioning arrangement is arranged at the upper tool. This is particularly preferred in combination with laser welding as welding method. In this regard, and as the upper tool is in such a case no longer arranged stationary at the frame of the welding device, it is further preferred that at least one additional spring is present, preferably a plurality of additional springs, for compensating the weight of the upper tool. For example, such an additional spring may be coupled between the upper tool and the frame of the welding device or the static first section of the welding device positioning arrangement. For the sake of completeness, it must be noted that a welding device positioning arrangement having an additional spring may also be used in combination with the lower tool.

An inventive elastic guiding system of a welding device positioning arrangement comprising a static first section and a second section movable relative to the static first section, at least one drive system connected at a first end to the first section and at a second end to the second section, and at least one elastic guiding system by means of which the first section and the second section are connected to each other, wherein the first section and the second section are movable relative to each other along only one axis due to the at least one elastic guiding system, so that an axial length of the welding device positioning arrangement can be varied, and the at least one drive system of the welding device positioning arrangement comprises a moving coil drive, or a piezo motor, a linear motor, an electromagnetic drive system, a coil system or a drive with field or excitation coil, or a rotatory motor which comprises mechanical losses which are less than a force with which, in operation, the first component can be pressed against the second component, wherein the force is ≤ 1 kN, preferably ≤ 500 N and particularly preferably ≤ 250 N, and the elastic guiding system comprises an inner ring for connection to the movable second section and an outer ring for connection to the static first section and the inner and the outer rings are connected to each other by a plurality of meander-shaped segments. This inventive design also ensures that the first and second sections of the welding device positioning arrangement can be moved relative to one another on only one axis. Furthermore, the respective elastic guiding system comprises no mechanical losses and therefore operates loss-free, as explained in general above. Preferably, such an elastic guiding system is made of steel.

In a preferred embodiment of the elastic guiding system, a first fastening point of a first segment at the outer ring is arranged in radial outward direction adjacent to a second fastening point of an adjacent second segment at the inner ring. Thus, the segments are arranged adjacent to each other, preferably in a non-overlapping manner in circumferential direction. Alternatively, the segments may overlap at least partially in circumferential direction. Further preferred, two, three or four meander-shaped segments are present. By proceeding this way, the properties of the elastic guiding system can be adjusted to the desired characteristics.

An inventive welding device positioning arrangement comprises a static first section and a second section movable relative to the static first section, at least one drive system connected at a first end to the first section and at a second end to the second section, and at least one elastic guiding system by means of which the first section and the second section are connected to each other, wherein the first section and the second section are movable relative to each other along only one axis due to the at least one elastic guiding system, so that an axial length of the welding device positioning arrangement can be varied, and the at least one drive system of the welding device positioning arrangement comprises a moving coil drive, or a piezo motor, a linear motor, an electromagnetic drive system, a coil system or a drive with field or excitation coil, or a rotatory motor which comprises mechanical losses which are less than a force with which, in operation, the first component can be pressed against the second component, wherein the force is ≤ 1 kN, preferably ≤ 500 N and particularly preferably ≤ 250 N, wherein the at least one guiding system comprises an inventive spring. Due to the usage of the inventive spring, the above explanations apply analogously to the inventive welding device positioning arrangement. Consequently, these explanations are not repeated for avoiding redundancies.

An inventive welding device comprises an upper tool, a lower tool, a control unit, and a welding device positioning arrangement, wherein the control unit is configured for performing the inventive control method and/or the welding device positioning arrangement is an inventive welding device positioning arrangement. As the welding comprises at least one of the inventive control method or the inventive welding device positioning arrangement, it is referred to the above passages regarding the technical effects and advantages for avoiding repetitions

In a preferred embodiment of the welding device, the positioning arrangement is arranged at the upper or the lower tool. In case the positioning arrangement is arranged at the upper tool, it is further preferred that an additional spring is present for compensating the weight of the upper tool, as explained above. Nevertheless, and alternatively, the positioning arrangement having the additional spring may also be used in combination with the lower tool. In each case, it is referred to the above explanations of the inventive control method for avoiding redundancies.

### 4. Brief description of the drawings

In the following, the present invention will be described in detail based on the drawings. In the drawings, the same reference signs denote the same elements and/or components. It shows:
- Fig. 1: a perspective view of a first example of a welding device positioning arrangement with a drive system and a centering spider as elastic guiding system,
- Fig. 2: a sectional view of the first example according to Fig. 1,
- Fig. 3: a perspective view of the first example according to Fig. 1 with semi-transparent sheath,
- Fig. 4: a perspective view of a second example of a welding device positioning arrangement similar to the first example, wherein the sensors are located inside,
- Fig. 5: a perspective view of the second example according to Fig. 4 with semi-transparent sheath,
- Fig. 6: a partial sectional view of an embodiment of a welding device positioning arrangement, wherein the sensors are mounted to the static first section,
- Fig. 7: a perspective view of an embodiment of an inventive elastic guiding system of a welding device positioning arrangement,
- Fig. 8: a first perspective view of an embodiment of an inventive welding device positioning arrangement using the embodiment of the elastic guiding system according to figure 7 as well as force and position sensors,
- Fig. 9: a second perspective view of the embodiment of an inventive welding device positioning arrangement according to figure 8,
- Fig. 10: a third perspective view of the embodiment of an inventive welding device positioning arrangement according to figure 8,
- Fig. 11: a fourth perspective view of the embodiment of an inventive welding device positioning arrangement according to figure 8,
- Fig. 12: a fifth perspective view of the embodiment of an inventive welding device positioning arrangement according to figure 8,
- Fig. 13: a schematic overview of the construction principle of the embodiment shown in figures 8 to 12,
- Fig. 14: a perspective view of a welding device, and
- Fig. 15: a flow chart of an embodiment of a control method.

### 5. Detailed description of preferred embodiments

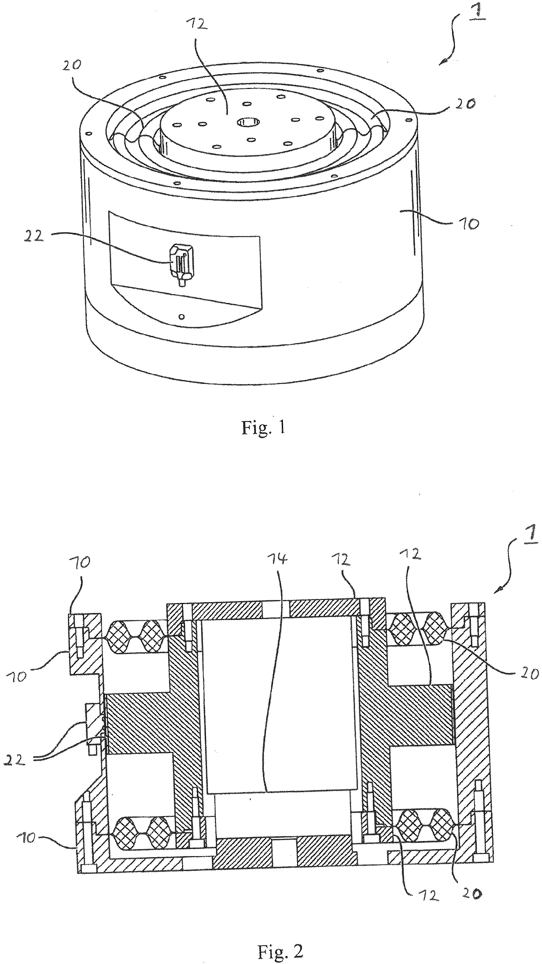

With respect to figures 1 to 6 and 8 to 12, four examples of a welding device positioning arrangement 1; 100; 200; 300 are discussed. Due to their dimensions, particularly filigree and/or extremely sensitive, for example electronic, components can be processed in a welding device 3 using one of the welding device positioning arrangements 1; 100; 200; 300. In particular, all the embodiments shown represent precision welding device positioning arrangements 1; 100; 200; 300 due to the achievable accuracy in positioning and force adjustment based on the control method used. For an easier understanding, in particular of the control method, the configuration of the welding device positioning arrangement will be explained in detail first.

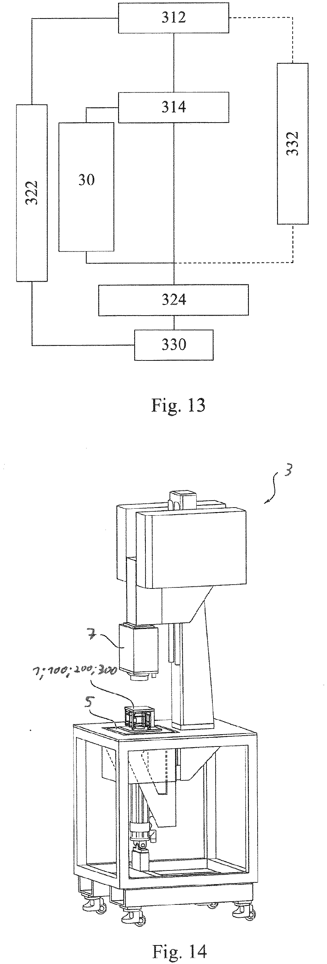

A first example of a welding device positioning arrangement 1 is shown in figures 1 to 3. The welding device positioning arrangement 1 comprises a static first section 10 and a second section 12 which is movable relative to the static first section 10. The dimensioning of the first 10 and the second section 12 can be adapted to the desired application. In the later operation, the components to be welded are clamped between the second section 12 and a tool of a welding device 3, as shown in Fig. 14, for example a lower tool 5 or an upper tool 7. In Fig. 14, the welding device positioning arrangement 1; 100; 200; 300 is arranged at the lower tool 5, which is a lifting table. Alternatively, the welding device positioning arrangement 1; 100; 200; 300 is arranged at the upper tool 7 (not shown). In each case, the first component can be pressed against the second component by means of the second section 12.

The welding device positioning arrangement 1 further comprises a drive system 14 in the center which comprises a moving coil drive or voice coil actuator. A first end of the moving coil drive is connected to the first section 10 and a second end is connected to the second section 12.

In the example shown in figures 1 to 3, the first section 10 is formed by a cylindrically shaped body which is formed closed on one side. The moving coil drive of the drive system 14 is arranged centrally in the first section 10, wherein the second section 12 is arranged at the second axial end of the moving coil drive of the drive system 14. The second section 12, for example, is also formed cylindrically shaped with a closed end, wherein the second section 12 formed in this manner is arranged above the drive system 14. Therefore, an opening of the second section 12 faces the base of the first section 10.

Due to the drive choice, the welding device positioning arrangement 1 is a precision welding device positioning arrangement 1. This means that the execution of the smallest movements and/or the application of the smallest forces can be realized by means of the welding device positioning arrangement 1.

The precision of the welding device positioning arrangement 1 is because a moving coil drive is a highly dynamic drive which does not display any mechanical friction. Regarding an adjustable axial length, i.e., the adjustable distance between the static first section 10 and the movable second section 12, this depends on the dimensioning of the moving coil drive. Typically, however, amplitudes and thus a variation of the axial length between 0.25 to 100 mm can be realized. Regarding the applicable forces, these can lie between 0 N and 2 kN. In addition, the moving coil drive is characterized by its extremely high positioning accuracy, which may be at +/-0.1 µm. As can be seen from the above designs, the moving coil drive can be positioned with high precision using the respective control and the force can also be controlled and/or regulated with high precision. In addition, due to their high speed, moving coil drives may be suitable for automated devices with high cycle rates.

In alternatively preferred designs, the drive system is a piezo motor, a linear motor, an electromagnetic drive system, a coil system or a drive with field or exciter coil. It may also be preferred that the drive system comprises a rotatory motor which has mechanical losses which are lower than a force with which the first component can be pressed against the second component during operation, wherein the force is ≤ 1 kN, preferably ≤ 500 N and particularly preferably ≤ 250 N. Except for the rotatory motor with mechanical losses, the other drive systems have no mechanical losses, for example due to friction between two components. The present disclosure therefore concerns loss-free drives with which a precision mini lifting table can be realized.

The first 10 and the second section 12 are connected to each other by means of the elastic guiding system 20. Here, two elastic guiding systems 20 are used, each consisting of a centering spider. In this context, both the first section 10 and the second section 12 have three portions, each connected to one another by means of screws, as shown in Fig. 2. The first section 10 has a circularly shaped base portion, a cylindrically shaped middle portion, and a ring-shaped top portion. The second section 12 comprises a circularly shaped upper face, a cylindrically shaped middle portion with a radially outwardly projecting projection and a ring-shaped base. A first centering spider as elastic guiding system 20 is fastened radially externally between the ring-shaped top face and the cylindrically shaped middle portion of the first section 10 and radially internally between the ring-shaped top face and the cylindrically shaped middle portion of the second section 12. Analogously, a second centering spider as elastic guiding system 20 is fastened radially externally between the circularly shaped base and the cylindrically shaped middle portion of the first section 10 and radially internally between the ring-shaped base and the cylindrically shaped middle portion of the second section 12. Furthermore, the circularly shaped top face of the second section 12 and the ring-shaped top face of the first section 10 may be arranged almost in alignment with each other in the initial state, as is shown in Fig. 2. The radial projection in the cylindrically shaped middle portion of the second section 12 serves to detect a movement of the second section 12 relative to the first section 10 by means of a displacement or path sensor 22.

The elastic guiding system 20 has no mechanical losses, i.e., it works loss-free within the scope of the present invention. In this context, loss-free means that there might be no friction or, with regard to the force required to weld the two components, only negligible friction between the movable components of the elastic guiding system 20.

By combining the low-friction and precise drive, namely the moving coil drive 14, for force build-up and adjustment of the desired axial length as well as a low-friction elastic guiding system 20, any friction losses in the welding device positioning arrangement 1 are preferably prevented. As a result, all hysteresis phenomena and stick-slip effects are avoided or at least significantly reduced compared to known lifting tables for welding devices. Therefore, the welding device positioning arrangement 1 may be suitable for use in a welding device with which small components are to be processed, such as foils for in-ear headphones or the manufacture of smartphones. High force peaks during contact recognition between the two components are also reduced and may be completely prevented. In this way, the trigger point for the actual welding start can be controlled with high precision, which leads to reproducible welding connections and any component destruction caused by this can be prevented.

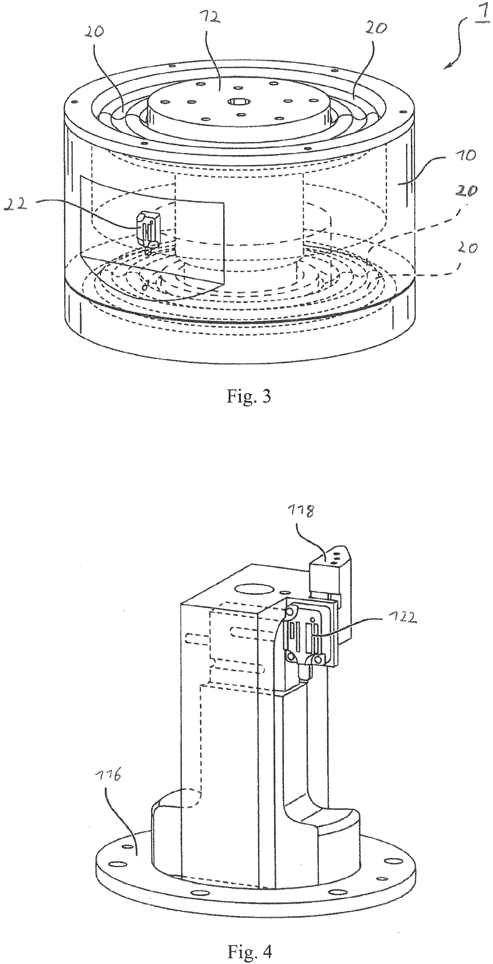

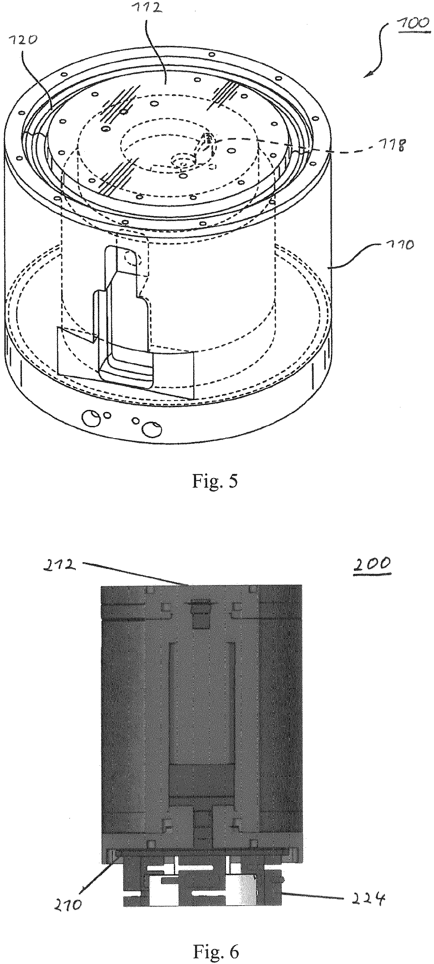

In Figs. 4 and 5, a modified example is shown in comparison to the example of Figs. 1 to 3. The two examples differ in that in the embodiment according to Figs. 4 and 5 the displacement or path sensor 122 is arranged inside the moving coil drive as drive system. This makes the overall setup of the welding device positioning arrangement 100 even more compact. Fig. 4 shows the setup inside the moving coil drive as drive system. A fastening portion for a core of the moving coil drive is indicated by 116 and a connecting portion for the second section 112 by 118.

Figure 6 shows a further example of a welding device positioning arrangement 200. Here, the general construction is similar to the above discussed examples 1 and 100. Additionally, three force sensors 224 are present, in particular S-beam sensors. A first end of the force sensors 224 is mounted to a frame of the welding device 3 and a second end of the force sensors 224 is mounted to the static first section 210 of the welding device positioning arrangement 200. The forces sensors 224 are arranged equally spaced on a common circle. By proceeding this way, the force can be very effectively measured, and the control method which will be explained later is further improved.

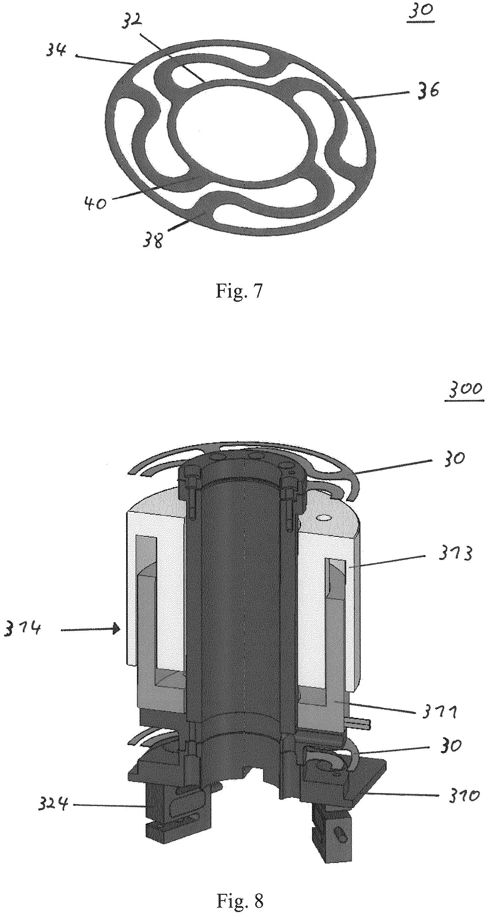

Now with respect to figure 7, an alternative design for an elastic guiding system 30 is shown. The elastic guiding system 30 is preferably made of steel and comprises an inner ring 32 for connection to the movable second section 12; 112; 212 and an outer ring 34 for connection to the static first section 10; 110; 210. The inner 32 and the outer ring 34 are connected to each other by a plurality of meander-shaped segments 36. This inventive design also ensures that the first 10; 110; 210 and second sections 12; 112; 212 of the welding device positioning arrangement 1; 100; 200 can be moved relative to one another on only one axis. Furthermore, the respective elastic guiding system 30 comprises no mechanical losses and therefore operates loss-free, as explained in general above.

A first fastening point 38 of a first segment 36 at the outer ring 34 is arranged in radial outward direction adjacent to a second fastening point 40 of an adjacent second segment 36 at the inner ring 32. Thus, the segments 36 are arranged adjacent to each other, preferably in a non-overlapping manner in circumferential direction. Alternatively, the segments 36 may overlap at least partially in circumferential direction. Further preferred, two, three or four meander-shaped segments 36 are present. By proceeding this way, the properties of the elastic guiding system 30 can be adjusted to the desired characteristics.

In the following, a further embodiment of a welding device positioning arrangement 300 will be discussed with respect to Fig. 8 to 13. In this embodiment, the above explained elastic guiding system 30 is used. Alternatively, other elastic guiding systems 20; 120 as described in combination with the embodiments 1 and 100 may be used, in particular a centering spider.

As can be seen in Fig. 8 showing a part of the inner construction, the drive system 314 is formed by a voice coil actuator having a coil 311 and a magnetic core 313. The coil 311 is coupled to the static first section 310 and the magnetic core 313 is coupled to the movable second section 312. The static first section 310 is comprised of three parts, i.e., an upper, an intermediate and a lower part. All three parts are connected to each other by screws. Further, between the upper and the intermediate part as well as between the intermediate and the lower part of the static first section 310, one elastic guiding system 30 is mounted. Further, force sensors 324, in particular S-beam sensors, are mounted with one end to the static first section 310.

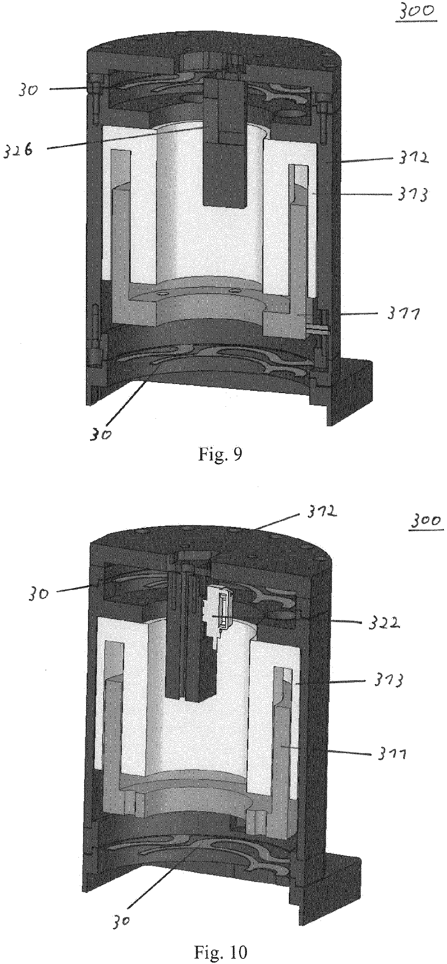

Now referring to Fig. 9, the further construction is explained. To this end, the static first section 310 is not shown in this illustration. Rather, the focus is directed to the movable second section 312 which is coupled to the magnetic core 313. Like the static first section 310, the movable second section 312 is comprised of three parts so that here, the elastic guiding system 30 is also mounted between the upper and the intermediate part as well as between the intermediate and the lower part of the movable second section 312. Additionally, a reading tape 326 of the displacement sensor 322 is shown and the position of the displacement sensor is indicated in Fig. 10.

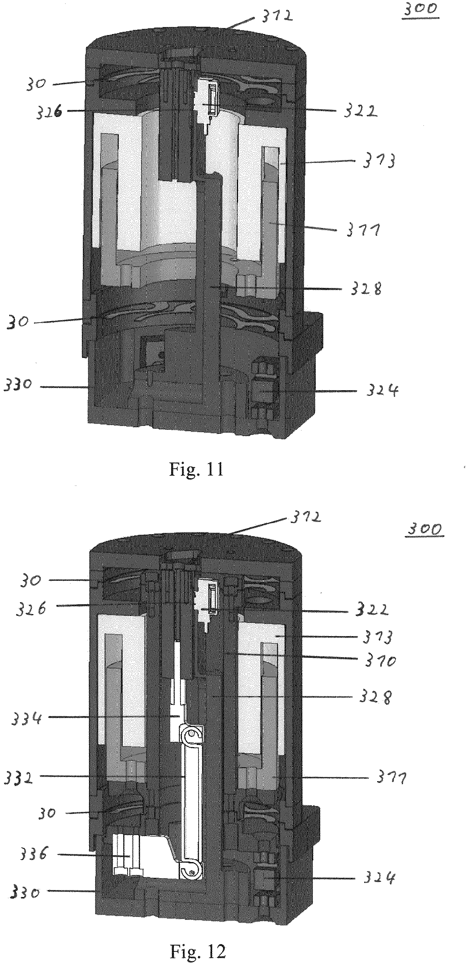

In Fig. 11, a holder 328 of the displacement sensor 322 is shown. For ensuring a reliable position measuring, the holder 328 is mounted to a base element 330. Further, another end of the force sensors 324 is mounted to the base element 330. To this end, the base element 330 may be part of the welding device or an individual part.

Fig. 12 shows the overall construction of the welding device positioning arrangement 300, including the static first section 310. Moreover, an additional spring 332 is present for compensating the weight of the upper tool 7 in case the welding device positioning arrangement 300 is mounted to the upper tool 7. In this regard it must be noted that the so designed welding device positioning arrangement 300 having the additional spring 332 may also be used in combination with a lower tool 5 of a welding device 3. For fastening the additional spring 332 in the welding device positioning arrangement 300, a first holder 334 is provided which couples the additional spring 332 to the movable second section 312. Likewise, a second holder 336 is provided which couples the additional spring 332 to the static first section 310.

Finally, Fig. 13 shows a schematic overview of the construction of the welding device positioning arrangement 300.

In figure 14, a welding device 3 is shown. This comprises a lifting table as lower tool 5, an upper tool 7, a control unit (not shown) as well as one of the above-described embodiments of the welding device positioning arrangement 1; 100; 200; 300 arranged at the lower tool 5. According to a first alternative, the static first section 10 of the welding device positioning arrangement 1; 100; 200; 300 is an integral part of the respective tool. According to a second alternative, the static first section 10 is mounted to the respective tool.

The welding device 3 itself can be any welding device 3, such as an ultrasonic welding device, a laser welding device, an infrared welding device, a vibration welding device, or a friction welding device.

Due to the elastic guiding system 20; 30; 120, the first and the second section can be moved relative to each other along only one axis. This axis may be a vertical axis, with respect to a base on which the welding device 3 is located. During operation, the components to be welded are clamped with the desired force between the upper tool 7 and the second section 12; 112; 212; 312 of the welding device positioning arrangement 1; 100; 200; 300.

A force with which the components to be welded together can be clamped by means of the welding device 3 is ≤ 1 kN, preferably ≤ 500 N and particularly preferred ≤ 250 N. Especially with filigree components, even lower forces are required, wherein ranges of ≤ 20 N, preferably ≤ 10 N and in particular ≤ 5 N can also be realized with the welding device 3.

Due to the specific setup of the welding device positioning arrangement 1; 100; 200; 300 used, an actual force with which the components to be welded together are clamped during operation differs from a predetermined nominal force by a maximum of 2.5 N, preferably by a maximum of 1 N and particularly preferably by a maximum 0.5 N. The same applies to a difference between the actual path and the predetermined nominal path. Thus, the actual path by which the axial length of the welding device positioning arrangement 1; 100; 200; 300 is varied during operation from a point of origin differs from a predetermined nominal path by a maximum of 1 mm, preferably by a maximum of 0.1 mm and particularly preferably by a maximum of 0.01 mm. Since a high reproducibility of the welding connections can be achieved by means of the welding device positioning arrangement 1; 100; 200; 300, the maximum difference for the force and/or the path is maintained with at least 3, preferably at least 5 and particularly preferably at least 10, consecutive welding processes.

In an alternative embodiment, not shown, the welding device positioning arrangement 1; 100; 200; 300 is arranged at the upper tool 7. In such case, the additional spring 332 is present for compensating the weight of the upper tool 7.

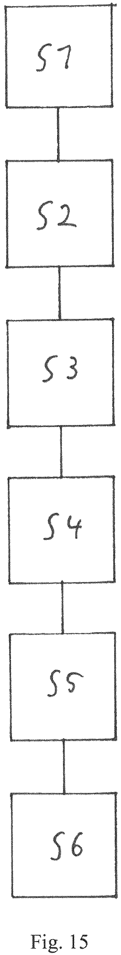

Finally, and with respect to Fig. 15, a flow chart of an embodiment of the inventive control method of the welding device 3 comprising a welding device positioning arrangement 1; 100; 200; 300 is explained. Preferably, the control method is stored in a memory of the control unit. Thus, it is preferred that the control unit is configured for performing the control method.

In a first inventive alternative of the control method, the welding device positioning arrangement 1; 100; 200; 300 is arranged at the lower tool 5. In a second inventive alternative of the control method, the welding device positioning arrangement 1; 100; 200; 300 is arranged at the upper tool 7. The latter is particularly preferred in combination with laser welding as welding method. Further, it is preferred that at least one additional spring is present in case the welding device positioning arrangement 1; 100; 200; 300 is arranged at the upper tool 7, preferably a plurality of additional springs. By proceeding this way, the weight of the upper tool 7 can be compensated. For example, such an additional spring may be coupled between the upper tool 7 and the frame of the welding device 3 or the static first section 10; 110; 210; 310 of the welding device positioning arrangement 1; 100; 200; 300.

Now referring back to the control method, initially and after the first and the second component have been arranged in the welding device 3 between the lower 5 and the upper tool 7, the lower tool 5 and the upper tool 7 are moved in a first step S1 relative to each other. To this end and initially, the first and the second component are preferably arranged in or on the lower tool 5. Alternatively preferred, the first component is arranged in the lower tool 5 and the second component 7 is arranged in the upper tool.

The relative movement of the lower 5 and the upper tool 7 takes place such that the initial first distance, e.g., the distance in which the components have been arranged in the welding device 3, is decreased to a reduced second distance. This may be realized by moving the lower tool 5 in the direction of the upper tool 7, by moving the upper tool 7 in the direction of the lower tool 5 or by moving both, the upper 7 and the lower tool 5.

When the upper 5 and the lower tool 7 are arranged with the reduced second distance between each other, the at least one drive system 14; 314, e.g., the moving coil drive, of the welding device positioning arrangement 1; 100; 200; 300 is actuated in step S2. Due to this, the axial length of the arrangement 1; 100; 200; 300 is changed by means of the drive system 14; 314. In particular, a distance between the static first section 10; 110; 210; 310 and the movable second section 12; 112; 212; 312 is increased whereby the two components to be welded are clamped with the desired force between the lower 5 and the upper tool 7.

For ensuring a reliable welding and preventing damage to the components to be welded to each other, in step S3 the force at the static first section 10; 110; 210; 310 of the welding device positioning arrangement 1; 100; 200; 300 and/or a position of the movable second section 12; 112; 212; 312 of the welding device positioning arrangement 1; 100; 200; 300 relative to the static first section 10; 110; 210; 310 is measured during the actuating (step S2) of the drive system 14; 314.

At the same time and, thus, also in step S3, the measured force and/or position is compared with a predetermined force and/or position. After the predetermined force and/or position has been reached, the actuating of the drive system is stopped. The stopping belongs also to step S3. Thus, a closed loop control is used when actuating the drive system 14; 314 for clamping the first and the second components between the upper 7 and the lower tool 5. As a result and at the end of steps S2 and S3, the two components are clamped between the movable second section 12; 112; 212; 312 of the welding device positioning arrangement 1; 100; 200; 300 and the opposite tool, i.e., either the upper 7 or the lower tool 5, depending on where the welding device positioning arrangement 1; 100; 200; 300 is arranged.

Concerning the preferred closed loop control, preferably a plurality of force sensors 224; 324 is used, preferably three force sensors 224; 324, in particular S-beam sensors. In this regard, it is referred to the embodiments shown in figures 6 and 8 to 12.

Alternatively, or in addition to the force sensors, the position of the static first 10; 110; 210; 310 and the movable second section 12; 112; 212; 312 of the welding device positioning arrangement 1; 100; 200; 300 is measured by a contactless method, preferably by an optical encoder. A sensor body of the optical encoder is mounted to a frame of the welding device 3, in particular by a holder 328, and a measuring means is arranged at the moveable second section 12; 112; 212; 312 of the welding device positioning arrangement 1; 100; 200; 300 or the respective tool of the welding device 3. Specifically due to this preferred arrangement, a deformation of the welding device positioning arrangement 1; 100; 200; 300, including the force sensors 224; 324, if present, is compensated. Thus, the control method using such a position sensor realizes a high precision and provides an increased accuracy.

Subsequently, the first and the second component are welded to each other in step S4.

After completion of the welding in step S4, the at least one drive system of the welding device positioning arrangement 1; 100; 200; 300 is again actuated in step S5 so that the distance between the static first section 10; 110; 210; 310 and the movable second section 12; 112; 212; 312 is decreased. This results in increasing the distance between the upper 7 and the lower tool 5, preferably up or back to the reduced second distance.

Finally, the lower tool 5 and the upper tool 7 are moved relative to each other in step S6 so that a distance between the lower tool 5 and the upper tool 7 is further increased, preferably from the reduced second distance to the initial first distance.

Thus, and due to the achievable accuracy, the welding device 3 with the welding device positioning arrangement 1; 100; 200; 300 can also be used for small components, such as welding foils for in-ear headphones or the manufacture of smartphones. Accordingly, the welding of filigree and/or extremely sensitive, especially electronic, components can be realized with exceptionally low welding forces. High-precision positioning of the components is also possible, as is significantly improved welding depth control. High force peaks at a contact detection between the two components are reduced and may be completely prevented due to the control method. In this way, the trigger point for the actual welding start can be controlled with high precision, which leads to reproducible welding connections and any component destruction caused by this can be prevented. The degree of precision of the welding device positioning arrangement now only depends on the accuracy of the used control and the corresponding sensors.

### 6. List of reference signs

1 welding device positioning arrangement
3 welding device
5 lower tool
7 upper tool
10 first section
12 second section
14 drive system
20 elastic guiding system
22 displacement sensor

30 elastic guiding system
32 inner ring
34 outer ring
36 meander-shaped segment
38 first fastening point at the outer ring 34
40 second fastening point at the inner ring 32

100 welding device positioning arrangement
110 first section
112 second section
116 fastening area for a core of the drive system
118 connection area for the second section 112
120 elastic guiding system
122 displacement sensor

200 welding device positioning arrangement
210 first section
212 second section
224 force sensor

300 welding device positioning arrangement
310 first section
311 coil of a voice coil actuator as drive system 314
312 second section
313 magnetic core of a voice coil actuator as drive system 314
314 drive system
322 displacement sensor
324 force sensor
326 reading tape of displacement sensor 322
328 holder of displacement sensor 322
330 base
332 additional spring (for weight compensation)
334 first holder of additional spring 332
336 second holder of additional spring 332

## Claims

1. A control method of a welding device (3) having an upper tool (7), a lower tool (5), a control unit and a welding device positioning arrangement (1; 100; 200; 300) comprising a static first section (10; 110; 210; 310) and a second section (12; 112; 212; 312) movable relative to the static first section (10; 110; 210; 310), at least one drive system (14; 314) connected at a first end to the first section (10; 110; 210; 310) and at a second end to the second section (12; 112; 212; 312), and at least one elastic guiding system (20; 30; 120) by means of which the first section (10; 110; 210; 310) and the second section (12; 112; 212; 312) are connected to each other, wherein the first section (10; 110; 210; 310) and the second section (12; 112; 212; 312) are movable relative to each other along only one axis due to the at least one elastic guiding system (20; 30; 120), so that an axial length of the welding device positioning arrangement (1; 100; 200; 300) can be varied, and the at least one drive system (14; 314) of the welding device positioning arrangement comprises
i. a moving coil drive, or
ii. a piezo motor, a linear motor, an electromagnetic drive system, a coil system or a drive with field or excitation coil, or
iii. a rotatory motor which comprises mechanical losses which are less than a force with which, in operation, the first component can be pressed against the second component, wherein the force is ≤ 1 kN, preferably ≤ 500 N and particularly preferably ≤ 250 N,
wherein the control method comprises the following steps:
a. moving (step S1) the lower tool (5) and the upper tool (7) relative to each other so that a distance between the lower tool (5) and the upper tool (7) is decreased from an initial first distance to a reduced second distance,
b. actuating (step S2) the at least one drive system (14) of the welding device positioning arrangement (1; 100; 200; 300) so that the distance between the static first section (10; 110; 210; 310) and the movable second section (12; 112; 212; 314) is increased whereby a first and a second component are pressed against each other with a force and,
c. during the actuating (step S2) of the at least one drive system (14), measuring a force at the static first section (10; 110; 210; 310) of the welding device positioning arrangement (1; 100; 200; 300) and/or a position of the movable second section (12; 112; 212; 312) of the welding device positioning arrangement (1; 100; 200; 300) relative to the static first section (10; 110; 210; 310), comparing the measured force and/or position with a predetermined force and/or position, and stopping the actuating after the predetermined force and/or position has been reached (step S3), subsequently
d. welding (step S4) the first and the second component to each other,
e. actuating (step S5) the at least one drive system (14; 314) of the welding device positioning arrangement (1; 100; 200; 300) after welding so that the distance between the static first section (10; 110; 210; 310) and the movable second section (12; 112; 212; 312) is decreased, and
f. moving (step S6) the lower tool (5) and the upper tool (7) relative to each other so that a distance between the lower tool (5) and the upper tool (7) is increased, preferably from the reduced second distance to the initial first distance.

2. The control method according to claim 1, wherein a plurality of force sensors (224; 324) is used, preferably three force sensors (224; 324), in particular S-beam sensors, a first end of which is preferably mounted to a frame of the welding device (3) and a second end of which is mounted to the static first section (210; 310) of the welding device positioning arrangement (200; 300).

3. The control method according to one of the preceding claims, wherein the relative position of the static first (10; 110; 310) and the movable second section (12; 112; 312) of the welding device positioning arrangement (1; 100; 200; 300) is measured by a contactless method, preferably by an optical encoder, wherein a sensor body is mounted to a frame of the welding device (3), in particular by a holder (328), and a measuring means is arranged at the moveable second section (12; 112; 312) of the welding device positioning arrangement (1; 100; 300) or the respective tool (5, 7) of the welding device (3).

4. The control method according to one of the preceding claims, wherein the welding device positioning arrangement (1; 100; 200; 300) is arranged at the lower tool (5).

5. The control method according to one of the claims 1 to 3, wherein the welding device positioning arrangement (1; 100; 200; 300) is arranged at the upper tool (7).

6. The control method according to one of the preceding claims, wherein at least one additional spring (332), preferably a plurality of additional springs, is provided, in particular for compensating the weight of the upper tool (7).

7. An elastic guiding system (30) of a welding device positioning arrangement (1; 100; 200; 300) comprising a static first section (10; 110; 210; 310) and a second section (12; 112; 212; 312) movable relative to the static first section (10; 110; 210; 310), at least one drive system (14; 314) connected at a first end to the first section (10; 110; 210; 310) and at a second end to the second section (12; 112; 212; 312), and at least one elastic guiding system (20; 30; 120) by means of which the first section (10; 110; 210; 310) and the second section (12; 112; 212; 312) are connected to each other, wherein the first section (10; 110; 210; 310) and the second section (12; 112; 212; 312) are movable relative to each other along only one axis due to the at least one elastic guiding system (20; 30; 120), so that an axial length of the welding device positioning arrangement (1; 100; 200; 300) can be varied, and the at least one drive system (14; 314) of the welding device positioning arrangement comprises
i. a moving coil drive, or
ii. a piezo motor, a linear motor, an electromagnetic drive system, a coil system or a drive with field or excitation coil, or
iii. a rotatory motor which comprises mechanical losses which are less than a force with which, in operation, the first component can be pressed against the second component, wherein the force is ≤ 1 kN, preferably ≤ 500 N and particularly preferably ≤ 250 N,
wherein the elastic guiding system (30) comprises inner ring (32) for connection to the movable second section (12; 112; 212; 312) and an outer ring (34) for connection to the static first section (10; 110; 210; 310) and
the inner (32) and the outer rings (34) are connected to each other by a plurality of meander-shaped segments (36).

8. The elastic guiding system (30) according to claim 7, wherein a first fastening point (38) of a first segment (36) at the outer ring (34) is arranged in radial outward direction adjacent to a second fastening point (40) of an adjacent second segment (36) at the inner ring (32).

9. The elastic guiding system (30) according to claim 7 or 8, wherein two, three or four meander-shaped segments (36) are present.

10. A welding device positioning arrangement (300) comprising a static first section (310) and a second section (312) movable relative to the static first section (310), at least one drive system (314) connected at a first end to the first section (310) and at a second end to the second section (312), and at least one elastic guiding system (30) by means of which the first section (310) and the second section (312) are connected to each other, wherein the first section (310) and the second section (312) are movable relative to each other along only one axis due to the at least one elastic guiding system (30), so that an axial length of the welding device positioning arrangement (300) can be varied, and the at least one drive system (314) of the welding device positioning arrangement (300) comprises
i. a moving coil drive, or
ii. a piezo motor, a linear motor, an electromagnetic drive system, a coil system or a drive with field or excitation coil, or
iii. a rotatory motor which comprises mechanical losses which are less than a force with which, in operation, the first component can be pressed against the second component, wherein the force is ≤ 1 kN, preferably ≤ 500 N and particularly preferably ≤ 250 N,
wherein the at least one elastic guiding system (30) is an elastic guiding system (30) according to one of the claims 6 to 9.

11. A welding device (3) comprising an upper tool (7), a lower tool (5), a control unit and a welding device positioning arrangement (1; 100; 200; 300), wherein
a. the control unit is configured for performing the control method according to one of the claims 1 to 5 and/or
b. the welding device positioning arrangement is a welding device positioning arrangement according to claim 10.

12. The welding device (3) according to claim 11, wherein the welding device positioning arrangement (1; 100; 200; 300) is arranged at the upper (7) or the lower tool (5).

13. The welding device (3) according to claim 11 or 12, wherein an additional spring (332) is present, in particular for compensating a weight of the upper tool (7).

## Amended claims

### Amended claims in accordance with Rule 137(2) EPC.

1. A control method of a welding device (3) having an upper tool (7), a lower tool (5), a control unit and a welding device positioning arrangement (1; 100; 200; 300) comprising a static first section (10; 110; 210; 310) and a second section (12; 112; 212; 312) movable relative to the static first section (10; 110; 210; 310), at least one drive system (14; 314) connected at a first end to the first section (10; 110; 210; 310) and at a second end to the second section (12; 112; 212; 312), and at least one elastic guiding system (20; 30; 120) by means of which the first section (10; 110; 210; 310) and the second section (12; 112; 212; 312) are connected to each other, wherein the first section (10; 110; 210; 310) and the second section (12; 112; 212; 312) are movable relative to each other along only one axis due to the at least one elastic guiding system (20; 30; 120), so that an axial length of the welding device positioning arrangement (1; 100; 200; 300) can be varied, and the at least one drive system (14; 314) of the welding device positioning arrangement comprises
i. a moving coil drive, or
ii. a piezo motor, a linear motor, an electromagnetic drive system, a coil system or a drive with field or excitation coil, or
iii. a rotatory motor which comprises mechanical losses which are less than a force with which, in operation, the first component can be pressed against the second component, wherein the force is ≤ 1 kN, preferably ≤ 500 N and particularly preferably ≤ 250 N, wherein the control method comprises the following steps:
a. moving (step S1) the lower tool (5) and the upper tool (7) relative to each other so that a distance between the lower tool (5) and the upper tool (7) is decreased from an initial first distance to a reduced second distance,
b. actuating (step S2) the at least one drive system (14) of the welding device positioning arrangement (1; 100; 200; 300) so that the distance between the static first section (10; 110; 210; 310) and the movable second section (12; 112; 212; 314) is increased whereby a first and a second component are pressed against each other with a force and,
c. during the actuating (step S2) of the at least one drive system (14), measuring a force at the static first section (10; 110; 210; 310) of the welding device positioning arrangement (1; 100; 200; 300) and/or a position of the movable second section (12; 112; 212; 312) of the welding device positioning arrangement (1; 100; 200; 300) relative to the static first section (10; 110; 210; 310), comparing the measured force and/or position with a predetermined force and/or position, and stopping the actuating after the predetermined force and/or position has been reached (step S3), subsequently
d. welding (step S4) the first and the second component to each other,
e. actuating (step S5) the at least one drive system (14; 314) of the welding device positioning arrangement (1; 100; 200; 300) after welding so that the distance between the static first section (10; 110; 210; 310) and the movable second section (12; 112; 212; 312) is decreased, and
f. moving (step S6) the lower tool (5) and the upper tool (7) relative to each other so that a distance between the lower tool (5) and the upper tool (7) is increased, preferably from the reduced second distance to the initial first distance.

2. The control method according to claim 1, wherein a plurality of force sensors (224; 324) is used, preferably three force sensors (224; 324), in particular S-beam sensors, a first end of which is preferably mounted to a frame of the welding device (3) and a second end of which is mounted to the static first section (210; 310) of the welding device positioning arrangement (200; 300).

3. The control method according to one of the preceding claims, wherein the relative position of the static first (10; 110; 310) and the movable second section (12; 112; 312) of the welding device positioning arrangement (1; 100; 200; 300) is measured by a contactless method, preferably by an optical encoder, wherein a sensor body is mounted to a frame of the welding device (3), in particular by a holder (328), and a measuring means is arranged at the moveable second section (12; 112; 312) of the welding device positioning arrangement (1; 100; 300) or the respective tool (5, 7) of the welding device (3).

4. The control method according to one of the preceding claims, wherein the welding device positioning arrangement (1; 100; 200; 300) is arranged at the lower tool (5).

5. The control method according to one of the claims 1 to 3, wherein the welding device positioning arrangement (1; 100; 200; 300) is arranged at the upper tool (7).

6. The control method according to one of the preceding claims, wherein at least one additional spring (332), preferably a plurality of additional springs, is provided, in particular for compensating the weight of the upper tool (7).

7. A welding device (3) comprising an upper tool (7), a lower tool (5), a control unit and a welding device positioning arrangement (1; 100; 200; 300), wherein the control unit is configured for performing the control method according to one of the claims 1 to 6.

8. The welding device (3) according to claim 7, wherein the welding device positioning arrangement (1; 100; 200; 300) is arranged at the upper (7) or the lower tool (5).

9. The welding device (3) according to claim 7 or 8, wherein an additional spring (332) is present, in particular for compensating a weight of the upper tool (7).

10. The welding device (3) according to one of the claims 7 to 9, wherein the welding device positioning arrangement (300) comprises a static first section (310) and a second section (312) movable relative to the static first section (310), at least one drive system (314) connected at a first end to the first section (310) and at a second end to the second section (312), and at least one elastic guiding system (30) by means of which the first section (310) and the second section (312) are connected to each other, wherein the first section (310) and the second section (312) are movable relative to each other along only one axis due to the at least one elastic guiding system (30), so that an axial length of the welding device positioning arrangement (300) can be varied, and the at least one drive system (314) of the welding device positioning arrangement (300) comprises
i. a moving coil drive, or
ii. a piezo motor, a linear motor, an electromagnetic drive system, a coil system or a drive with field or excitation coil, or
iii. a rotatory motor which comprises mechanical losses which are less than a force with which, in operation, the first component can be pressed against the second component, wherein the force is ≤ 1 kN, preferably ≤ 500 N and particularly preferably ≤ 250 N,
wherein the at least one elastic guiding system (30) comprises an inner ring (32) for connection to the movable second section (12; 112; 212; 312) and an outer ring (34) for connection to the static first section (10; 110; 210; 310) and
the inner (32) and the outer rings (34) are connected to each other by a plurality of meander-shaped segments (36)

11. The welding device (3) according to claim 10, wherein a first fastening point (38) of a first segment (36) at the outer ring (34) is arranged in radial outward direction adjacent to a second fastening point (40) of an adjacent second segment (36) at the inner ring (32).

12. The welding device (3) according to claim 10 or 11, wherein two, three or four meander-shaped segments (36) are present.
